# EUROPEAN PATENT SPECIFICATION

(11) **EP 1 806 862 B1**
(45) Date of publication and mention of the grant of the patent: **13.01.2010**
(21) Application number: 05808340.3
(22) Date of filing: 07.11.2005
(51) Int. Cl.: H04W 76/02

(54) **A METHOD FOR ESTABLISHING CALL CONNECTION**
EIN VERFAHREN ZUR ERRICHTUNG EINER RUFVERBINDUNG
PROCEDE POUR ETABLIR UNE CONNEXION D'APPEL

(30) Priority: 07.11.2004 CN 200410094534
(43) Date of publication of application: 11.07.2007
(73) Proprietor: Huawei Technologies Co., Ltd., Longang District Shenzhen 518129 (CN)
(72) Inventor: CHEN, De, Huawei Admininistration Building, Shenzhen Guangdong 518129 (CN); YANG, Ping, Huawei Admininistration Building, Shenzhen Guangdong 518129 (CN); CHENG, Jinneng, Huawei Admininistration Building, Shenzhen Guangdong 518129 (CN)
(74) Representative: Thun, Clemens
(86) International application number: PCT/CN2005/001863
(87) International publication number: WO 2006/047961

(56) References cited:
- WO-A-02/37890
- WO-A-03/017621
- WO-A-2005/086501
- CN-A- 1 197 357
- US-B1- 6 181 930
- "Fast Call Setup, System Requirements" 3RD GENERATION PARTNERSHIP PROJECT 2 3GPP2, 15 April 2002 (2002-04-15), pages 1-6, XP002301440

## Description

### Field of the Invention

The present invention relates to the field of mobile communications, and particularly to a method and a system for setting up a call connection with a called party.

### Background of the Invention

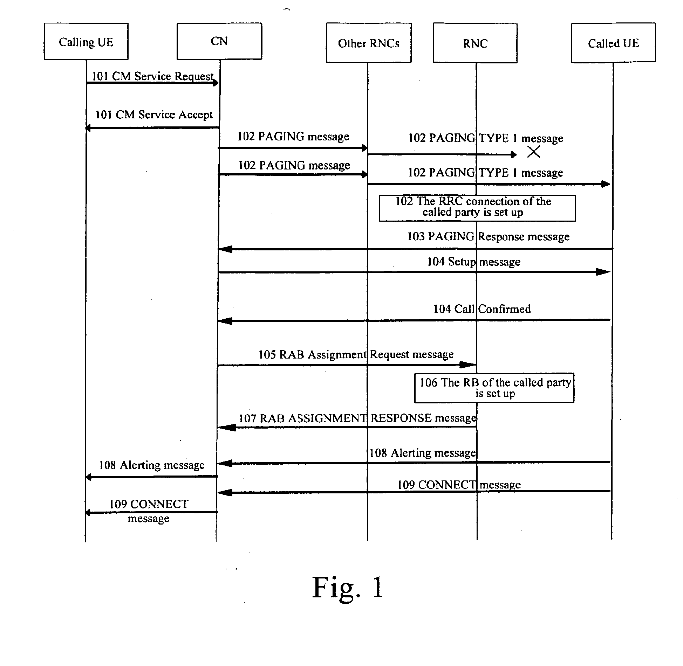

At present, the process of setting up a call connection with a called party in a Wideband Code Division Multiple Access (WCDMA) system is relatively complex and time-consuming. Fig. 1 is a flowchart illustrating the conventional process of setting up a call connection with a called party. Referring to Fig. 1, in the WCDMA system, after a calling User Equipment (UE) sets up a Radio Resource Control (RRC) connection with a Radio Network Controller (RNC), the conventional process of setting up a call connection with a called party includes the following processes.

Step 101: the calling UE sends a Connection Management (CM) Service Request message carrying a service type to a Core Network (CN); and the CN replies to the calling UE with a CM Service Accept message.

In the process, the CM Service Request message includes Quality of Service (QoS) parameters of the call.

Step 102: the CN sends PAGING messages to all RNCs corresponding to a location area where the called UE is located; the RNCs send a PAGING TYPE 1 message; after the called UE receives the PAGING TYPE 1 message, the RRC connection between the called UE and the RNC is established.

Step 103: the called UE sends a PAGING Response message to the CN.

Step 104: the CN sends to the called UE a SETUP message upon receiving the PAGING Response message; and the called UE replies to the CN with a Call Confirmed message.

In the process, the CN sends the SETUP message to the called UE upon receiving the SETUP message from the calling UE.

Step 105: the CN sends to the RNC a Radio Access Bearer (RAB) Assignment Request message including the QoS parameters of the call.

Step 106: the RNC maps radio interface parameters according to the QoS parameters in the RAB Assignment Request message, and performs the process of setting up a Radio Bearer (RB) connection with the called UE.

Step 107: after the RB connection is established, the RNC sends to the CN a RAB ASSIGNMENT RESPONSE message to indicate the completion of the service assignment.

Step 108: the called UE sends an Alerting message to the CN; the CN sends the Alerting message to the calling UE; and the calling UE thus receives ring back tone.

Step 109: the called UE sends a CONNECT message to the CN; and the CN sends the CONNECT message to the calling UE, thereby the calling user and the called user talk with each other.

As can be seen from the flowchart shown in Fig. 1, during the conventional process of setting up a call connection, the called UE needs to perform a first interaction process of interacting the PAGING message and the PAGING Response message with the CN, and a second interaction process of interacting the SETUP message and the Call Confirmed message with the CN. However, it taks about 300ms to perform the second interaction process, thus the time for setting up a call connection increases greatly.

International patent application WO 03/017621 A1 provides techniques for minimizing call setup latency. In one aspect, multiple signaling messages are encapsulated and sent as a single message thus reducing the total delay incurred by sequential transmission. The encapsulation is performed at a Link Access Control (LAC) layer or at an alternative layer.

### Summary of the Invention

According to an embodiment of the present invention, a method for setting up a call connection includes:
notifying, by a Core Network, CN, through a Radio Network Controller, RNC, a called terminal to set up a rapid call connection upon receiving a service request message from a calling terminal;
setting up, by the called terminal, the rapid call connection with the RNC through setting up a signalling connection and a service connection simultaneously with the RNC;
and performing, by the called terminal, a rapid connection processing with the calling terminal;
wherein the setting up the signalling connection and the service connection simultaneously with the RNC further includes:
sending (206) by the called terminal, a Radio Resource Control, RRC, connection request message to the RNC;
setting (207) by the RNC, a configuration parameter of Radio Bearer, RB, and a configuration parameter of Signaling RB, SRB;
sending, by the RNC, an RRC connection setup message and an RB setup message to the called terminal.

According to an embodiment of the present invention, a terminal for a WCDMA or a TD-SCDMA system includes a component, which is adapted to send a Radio Resource Control, RRC, connection request message to an RNC upon receiving a paging message; and another component, which is adapted to configure a Signalling Radio Bearer, SRB, and an RB, and send an RRC connection setup completion message and an RB setup completion message to the RNC upon receiving an RRC connection setup message and an RB setup message from the RNC;
wherein the terminal is adapted to set up a signaling and a service connection simultaneously with the RNC so that the terminal performs a rapid connection processing with another terminal.

The terminal may further include a first component for adding a rapid connection ID into a service request message; a second component for sending the service request message carrying the rapid connection ID to a Core Network, CN, through a Radio Network Controller, RNC; and a third component for performing rapid connection processing with another terminal.

Preferably, the terminal may further include a fourth component for setting up a signalling connection and a service connection simultaneously with the RNC.

According to an embodiment of the present invention, a device in a Core Network, CN, for a WCDMA or a TD-SCDMA system includes:
a fifth component is adapted to determine, according to a rapid connection ID carried in a service request message sent by a calling terminal, whether to notify through a Radio Network Controller, RNC, a called terminal to set up a rapid call connection, wherein the called terminal sets up the rapid call connection through: setting up a signalling connection and a service connection simultaneously with the RNC; and
a sixth component is adapted to send a paging message for paging the called terminal and a setup message to RNCs corresponding to a location area where the called terminal is located, sending a Radio Access Bearer, RAB, Assignment Request message carrying a Quality of Service, QoS, parameter to each of the RNCs.

According to the embodiment of the present invention, A system for setting up a call connection includes a Core Network, CN, a calling terminal, a Radio Network Controller, RNC, and a called terminal, wherein:
the CN is adapted to notify, through theRNC, the called terminal to set up a rapid call connection upon receiving the service request message from the calling terminal,
the called terminal is adapted to set up a signalling connection and a service connection simultaneously with the RNC; perform a rapid connection processing with the calling terminal; wherein setting up the signalling connection and the service connection simultaneously with the RNC further includes:
the called terminal is adapted to send (206) a Radio Resource Control, RRC, connection request message to the RNC; and the RNC is adapted to set (207) a configuration parameter of Radio Bearer, RB, and a configuration parameter of Signaling RB, SRB, and send (208) an RRC connection setup message and an RB setup message to the called terminal.

According to an embodiment of the present invention, the SETUP message and the Call Confirmed message are respectively combined with the PAGING message and the Paging Response message, that is, the pairs of messages are sent simultaneously or combined to form one message, thus saving one message interaction process between the CN and the called UE, reducing the call establishment delay, and greatly reducing the time occupied by the process of setting up a call connection.

The QoS parameters are sent through the RAB Assignment Request message to the RNC immediately after the CN sends the PAGING message. The RNC sets up not only the signalling connection, i.e. the RRC connection, but also the RB connection, and the two serial processes of RRC setup and RB setup are combined into one process, thereby reducing the call establishment delay and greatly reducing the time occupied by setting up a call connection.

When the automatic answer function is configured for the called UE, the called UE does not send the Alerting message to the calling UE, instead, sends the CONNECT message, the PAGING Response message and the Call Confirmed message simultaneously, or sends a message combining the three messages, thereby reducing the call establishment delay, and the time occupied by setting up a call connection greatly.

When no automatic answer function is configured for the called UE, the called UE sends the Alerting message, the PAGING Response message and the Call Confirmed message simultaneously, or sends a message combining the three messages, thereby reducing the call establishment delay, and the time occupied by setting up a call connection greatly.

As can be seen from the above that, through combining the interaction messages between the CN and the called UE, and through combining the RRC setup and the RB setup processes of the called UE, the serial processes of setting up a call can be performed simultaneously, which reduces the time occupied by the process of setting up a call in the WCDMA system and the Time Division-Synchronous Code Division Multiple Access (TD-SCDMA) system and further provides a good application future for the Push-to-Talk (PTT) service sensitive to the delay in the process of setting up a call.

### Brief Description of the Drawings

Fig. 1 is a conventional flowchart illustrating the process of setting up a call connection with a called party.
Fig. 2 is a flowchart illustrating the process of setting up a call connection with a called party according to an embodiment of the present invention.

### Detailed Description of the Invention

The inventor of the present invention finds that, in the conventional process of setting up a call connection with a called party, the CN can send the RAB Assignment Request message including the QoS parameters to the RNC to trigger the process of setting up the RB connection only upon receiving the Call Confirmed message sent by the called UE. However, the QoS parameters have been determined when the CN receives the CM Service Request message sent by the calling UE, that is, the CN has acquired the QoS parameters that will be carried in the RAB Assignment Request message before the called UE sets up the RRC connection. But the CN sends the QoS parameters after the RRC connection of the called UE is set up, instead of sending the QoS parameters as soon as possible to the RNC to set up the RB connection. As a result, the time occupied by the process of setting up a call connection is greatly increased.

Futhermore, in the case that an automatic answer function is configured for the called UE, the speech link between the calling UE and the called UE has been established after the signalling connection and the RB connection are established, i.e. after the CN receives the RAB ASSIGNMENT RESPONSE message sent by both the RNC of the calling UE and the RNC of the called UE. Therefore, the called UE can just send the CONNECT message to the calling UE through the CN without sending the Alerting message. But in the conventional process, the called UE still sends the Alerting message to the calling UE after the speech link is established, greatly increasing the time occupied by the process of setting up a call connection.

In view of the above, embodiments of the present invention are provided and are described with reference to the accompanying drawings.

In an embodiment, the process of setting up a call connection in the WCDMA system is illustrated.

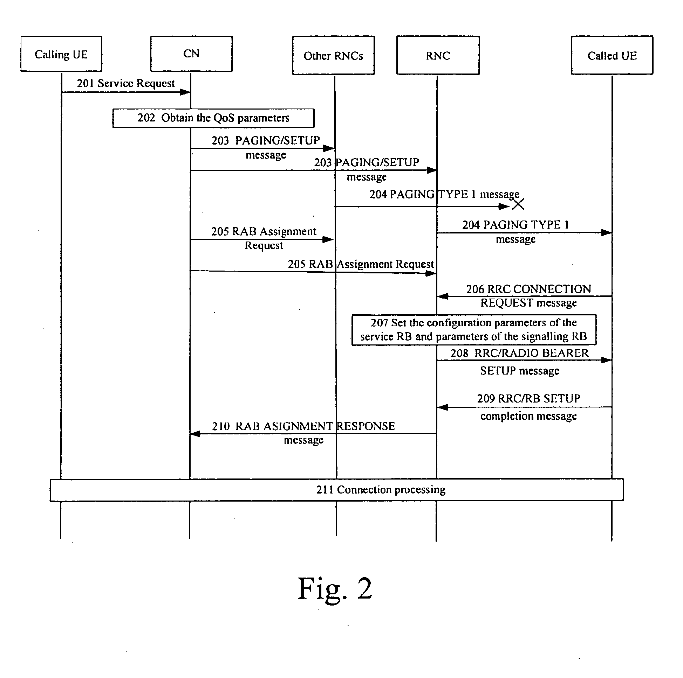

Fig. 2 is a flowchart illustrating the process of setting up a call connection with a called party according to an embodiment of the present invention. Referring to Fig. 2, in order to greatly reduce the time occupied by the process of setting up a call connection between a calling user and a called user, the process of setting up a call connection with the called party according to an embodiment of the present invention mainly includes the following processes.

Step 201: the calling UE sends to the CN a Service Request message carrying a rapid connection ID.

In the process, with the rapid connection ID carried in the Service Request message, the calling UE notifies, through the rapid connection ID, the network side to perform rapid call setup instead of normal call setup.

In addition, there are two methods for the calling UE to have the rapid connection ID carried in the Service Request message. In one method, the rapid connection ID is carried in an Information Element (IE) newly added in the Service Request message. In another method, one of nine unused values in a service type IE in the Service Request message is used to carry the rapid connection ID.

It should be noted that the Service Request message sent by the calling UE to the CN carries service type information and the QoS parameters.

Step 202: upon receiving the Service Request message sent by the calling UE, the CN determines that the rapid call processing is needed for the call according to the rapid connection ID carried in the Service Request message, and obtains the QoS parameters of the call from the Service Request message.

Step 203: the CN sends, to all RNCs corresponding to the location area where the called UE is located, a PAGING message for paging the called UE and a SETUP message.

In the process, the CN sends both the PAGING message and the SETUP message together, for example, sends the two messages, i.e. the PAGING message and the SETUP message, to the RNCs corresponding to the location area where the called UE is located simultaneously; or combines the PAGING message and the SETUP message into one message, and sends the combined message to the RNCs corresponding to the location area where the called UE is located.

Step 204: each of the RNCs sends a PAGING message through a PAGING TYPE 1 message, and starts a timer supervising the answer of the called UE.

Step 205: the CN sends an RAB Assignment Request message carrying the QoS parameters to each of the RNCs.

It should be noted that, the process of the CN sending the RAB Assignment Request message carrying the QoS parameters is performed as soon as the CN sends the PAGING message for paging the called UE and the SETUP message; or, the process is combined with Step 203, that is, the CN sends simultaneously three messages, i.e. the PAGING message, the SETUP message and the RAB Assignment Request message carrying the QoS parameters, to the RNCs corresponding to the location area where the called UE is located; or, the CN combines the PAGING message, the SETUP message, and the RAB Assignment Request message carrying the QoS parameters into one message, and sends the combined message to the RNCs corresponding to the location area where the called UE is located.

Step 206: upon receiving the PAGING TYPE 1 message sent by the RNC, the called UE sends an RRC connection request message, to an RNC of the RNCs corresponding to the location area where the called UE is located, for setting up an RRC connection with the network.

Step 207: upon receiving the RRC connection request message, the RNC stops the timer supervising the answer of the called UE, and sets the configuration parameter of the RB and the configuration parameter of the Signalling RB (SRB) according to the QoS parameters in the RAB Assignment Request message sent by the CN.

It should be noted that, in Steps 204 to 207, each of the RNCs starts the timer when sending the PAGING TYPE 1 message, and sends the PAGING TYPE 1 message at regular intervals; if the RNC does not receive the answer from the called UE when the timer expires, terminate the process of setting up a call connection.

Step 208: the RNC sends RRC CONNECTION SETUP message and RADIO BEARER SETUP message to the called UE.

In the process, the RNC may send two messages simultaneously, i.e. the RRC CONNECTION SETUP message and the RADIO BEARER SETUP message, to the called UE; or, the RNC combines the RRC CONNECTION SETUP message and the RADIO BEARER SETUP message into one message, and sends the combined message to the called UE. Thus the time for setting up a call is reduced greatly.

Step 209: the called UE configures the SRB and the RB, and sends to the RNC a message carrying the information of RRC CONNECTION SETUP completion and the RB SETUP completion.

In the process, the called UE may send two messages simultaneously, i.e. an RRC CONNECTION SETUP completion message and a RADIO BEARER SETUP completion message, to the RNC; or, the called UE may combine the RRC CONNECTION SETUP completion message and the RADIO BEARER SETUP completion message into one message, and sends the combined message to the RNC. Obviously, the time for setting up a call is reduced greatly.

Step 210: the RNC sends an RAB ASSIGNMENT RESPONSE message to the CN, indicating the completion of the service setup.

Step 211: the called UE performs connection processing with the calling UE.

If an automatic answer function is configured for the called UE, upon performing the signalling connection and the service connection, the called UE sends a PAGING response message, a Call Confirmed message and a CONNECT message to the CN simultaneously; or the called UE combines the three messages above into one message and sends the combined message to the CN. Upon receiving the three messages or the combined message, the CN sends the CONNECT message to the calling UE. After the calling UE receives the CONNECT message, the connection processing between the calling UE itself and the called UE is finished, that is, the calling user and the called user start to talk with each other.

If no automatic answer function is configured for the called UE, upon performing the signalling connection and the service connection, the called UE sends a PAGING Response message, a Call Confirmed message and an Alerting message to the CN simultaneously. Or, the called UE combines the three messages above into one message and sends the combined message to the CN. Upon receiving the three messages or the combined message, the CN sends the Alerting message to the calling UE, the calling UE thus receives the ring back tone. After the called party hooks off, the called UE sends through the CN the CONNECT message to the calling UE. After the calling UE receives the CONNECT message, the connection processing between the calling UE and the called UE is finished, that is, the calling user and the called user start to talk with each other.

According to an embodiment of the present invention, the method of combining two messages into one message may be as follows: combining all parameters carried in the two messages into one message.

The method for setting up a call connection according to an embodiment of the present invention is applicable not only to the WCDMA system, but also to the TD-SCDMA system. When the method is applied in the TD-SCDMA system, only the parameters of radio channel establishment will be changed, while the specific performing process is the same as the principle shown in Fig. 2.

To sum up, the foregoing descriptions are only a preferred embodiment of the present invention and are not for use in limiting the protection scope thereof.

## Claims

1. A method for setting up a call connection, comprising:
notifying, by a Core Network, CN, through a Radio Network Controller, RNC, a called terminal to set up a rapid call connection upon receiving a service request message from a calling terminal;
setting up, by the called terminal, the rapid call connection with the RNC through setting up a signalling connection and a service connection simultaneously with the RNC; and performing, by the called terminal, a rapid connection processing with the calling terminal;
wherein the setting up the signalling connection and the service connection simultaneously with the RNC further comprises:
sending (206) by the called terminal, a Radio Resource Control, RRC, connection request message to the RNC;
setting (207), by the RNC, a configuration parameter of Radio Bearer, RB, and a configuration parameter of Signaling RB, SRB;
sending (208), by the RNC, an RRC connection setup message and an RB setup message to the called terminal.

2. The method of Claim 1, wherein the service request message carries a rapid connection ID; and the CN determines, according to the rapid connection ID, to perform the process of notifying the called terminal to set up the rapid call connection.

3. The method of Claim 2, further comprising: adding an information element in the service request message to carry the rapid connection ID.

4. The method of Claim 2, wherein the service request message sent by the calling terminal carries the rapid connection ID through any value of a service type information element in the service request message.

5. The method of Claim 1, wherein the process of notifying the called terminal to set up the rapid call connection comprises:
sending a paging message for paging the called terminal and a setup message to RNCs corresponding to a location area where the called terminal is located;
sending a Radio Access Bearer, RAB, Assignment message carrying a Quality of Service QoS parameter to each of the RNCs;
and sending, by each of the RNCs, a paging message through a PAGING TYPE 1 message.

6. The method of Claim 5, wherein the process of sending the paging message for paging the called terminal and the setup message comprises:
sending the paging message and the setup message to the RNCs corresponding to the location area where the called terminal is located simultaneously; or
combining the paging message and the setup message into one message and sending the combined message to the RNCs corresponding to the location area where the called terminal is located.

7. The method of Claim 5 or 6, wherein the process of sending the RAB Assignment message carrying the QoS parameter to each of the RNCs is performed after the process of sending the paging message for paging the called terminal and the setup message is performed.

8. The method of Claim 5, wherein the process of sending the paging message for paging the called terminal and the setup message, and sending the RAB Assignment message comprises:
sending the paging message, the setup message and the RAB Assignment message carrying the QoS parameter to the RNCs corresponding to the location area where the called terminal is located simultaneously; or
combining the paging message, the setup message and the RAB Assignment message carrying the QoS parameter into one message and sending the combined message to the RNCs corresponding to the location area where the called terminal is located.

9. The method of Claim 5, further comprising:
starting a timer when sending the PAGING TYPE 1 message by each of the RNCs, and sending the PAGING TYPE 1 message at regular intervals;
terminating the process of setting up a call connection if no answer is received from the called terminal when the timer expires.

10. The method of Claim 5, wherein the process of setting the configuration parameters is according to the QoS parameter in the RAB Assignment message upon receiving the RRC connection request message; the method further comprises:
sending (206), by the called terminal, the Radio Resource Control, RRC, connection request message to the RNC upon receiving (204) the PAGING TYPE 1 message sent by the RNC before the RNC sets the configuration parameters; and
after receiving (208) the RRC connection setup message and the RB setup message from the RNC, configuring, by the called terminal, the Signalling RB and the RB, and sending (209) a message carrying information of RRC connection setup completion and information of RB setup completion to the RNC; and
sending (210), by the RNC, an RAB Assignment Response message to the CN.

11. The method of claim 1 or 10, wherein the process of sending the RRC connection setup message and the RB setup message to the called terminal comprises:
sending the RRC connection setup message and the RB setup message to the called terminal simultaneously; or
combining the RRC connection setup message and the RB setup message into one message and sending the combined message to the called terminal.

12. The method of claim 10, wherein the process of sending the message carrying the information of RRC connection setup completion and the information of RB setup completion to the RNC by the called terminal comprises:
sending an RRC connection setup completion message and an RB setup completion message simultaneously to the RNC; or
combining the RRC connection setup completion message and the RB setup completion message into one message and sending the combined message to the RNC.

13. The method of claim 1, wherein an automatic answer function is configured for the called terminal; and
the process of performing the rapid connection processing comprises:
upon setting up the signalling connection and the service connection, sending, by the called terminal, a paging response message, a call confirmed message and a connection message simultaneously to the CN; or combining the paging response message, the call confirmed message and the connection message into one message and sending the combined message to the CN;
sending, by the CN, the connection message to the calling terminal;
starting to talk between a calling user and a called user upon receiving the connection message by the calling terminal.

14. The method of claim 1, wherein no automatic answer function is configured for the called terminal; and
the process of performing the rapid connection processing comprises:
upon setting up the signalling connection and the service connection, sending, by the called terminal, a paging response message, a call confirmed message and an Alerting message simultaneously to the CN; or combining the paging response message, the call confirmed message and the Alerting message into one message and sending the combined message to the CN;
sending, by the CN, the Alerting message to the calling terminal;
sending, by the called terminal, a connection message to the CN after the called party hooks off;
sending, by the CN, the connection message to the calling terminal;
starting to talk between a calling user and a called user upon receiving the connection message by the calling terminal.

15. A terminal for a Wideband Code Division Multiple Access, WCDMA, system or a Time Division-Synchronous Code Division Multiple Access, TD-SCDMA, system, comprising:
a component, adapted to send a Radio Resource Control, RRC, connection request message to an RNC upon receiving a paging message;
a component, adapted to configure a Signalling Radio Bearer, SRB, and an RB, and send an RRC connection setup completion message and an RB setup completion message to the RNC upon receiving an RRC connection setup message and an RB setup message from the RNC;
wherein the terminal is adapted to set up a signaling and a service connection simultaneously with the RNC so that the terminal performs a rapid connection processing with another terminal.

16. The terminal of claim 15, further comprising:
a first component, adapted to add a rapid connection ID into a service request message;
a second component, adapted to send the service request message carrying the rapid connection ID to a Core Network, CN, through a Radio Network Controller, RNC; and
a third component, adapted to perform rapid connection processing with another terminal;
a fourth component, adapted to set up a signalling connection and a service connection simultaneously with the RNC.

17. The terminal of claim 15 or 16, the eighth component further comprises:
a sixth sub-module, adapted to combine the RRC connection setup completion message and the RB setup completion message into one message, and send the combined message to the RNC.

18. A device in a Core Network, CN, for a Wideband Code Division Multiple Access, WCDMA, system or a Time Division-Synchronous code Division Multiple Access, TD-SCDMA system, comprising:
a fifth component, adapted to determine, according to a rapid connection ID carried in a service request message sent by a calling terminal, whether to notify through a Radio Network Controller, RNC, a called terminal to set up a rapid call connection, wherein the called terminal sets up the rapid call connection through setting up a signalling connection and a service connection simultaneously with the RNC; and
a sixth component, adapted to send a paging message for paging the called terminal and a setup message to RNCs corresponding to a location area where the called terminal is located, and send a Radio Access Bearer, RAB Assignment Request message carrying a Quality of Service, QoS, parameter to each of the RNCs.

19. The device of claim 18, wherein the sixth component comprises:
a first sub-module, adapted to combine the paging message and the setup message into one message and send the combined message to the RNCs; and
a second sub-module, adapted to send the RAB Assignment Request message carrying the QoS parameter to each of the RNCs.

20. The device of claim 18, wherein the sixth component comprises:
a third sub-module, adapted to combine the paging message, the setup message and the RAB Assignment Request message into one message; and
a fourth sub-module, adapted to send the combined message to the RNCs.

21. A system for setting up a call connection, comprising: a Core Network, CN, a calling terminal, a Radio Network Controller, RNC, and a called terminal, wherein:
the CN is adapted to notify, through the RNC, the called terminal to set up a rapid call connection upon receiving a service request message from the calling terminal;
the called terminal is adapted to set up the rapid call connection with the RNC through setting up a signalling connection and a service connection simultaneously with the RNC; and perform rapid connection processing with the calling terminal; wherein the setting up the signalling connection and the service connection simultaneously with the RNC further comprises:
the called terminal is adapted to send (206) a Radio Resource Control, RRC, connection request message to the RNC; and the RNC is adapted to set (207) a configuration parameter of Radio Bearer, RB, and a configuration parameter of Signaling RB, SRB, and send (208) an RRC connection setup message and an RB setup message to the called terminal.

22. The system of claim 21, wherein the CN comprises a device, wherein the device further comprises:
a fifth component, adapted to determine, according to a rapid connection ID carried in the service request message sent by the calling terminal, whether to notify through the RNC the called terminal to set up the rapid call connection; and
a sixth component, adapted to send a paging message for paging the called terminal and a setup message to RNCs corresponding to a location area where the called terminal is located, and send a Radio Access Bearer, RAB, Assignment Request message carrying a Quality of Service, QoS, parameter to each of the RNCs.

23. The system of claim 22, wherein the sixth component comprises:
a first sub-module, adapted to combine the paging message and the setup message into one message and send the combined message to the RNCs; and
a second sub-module, adapted to send the RAB Assignment Request message carrying the QoS parameter to each of the RNCs.

24. The system of claim 23, wherein the sixth component comprises:
a third sub-module, adapted to combine the paging message, the setup message and the RAB Assignment Request message into one message; and
a fourth sub-module, adapted to send the combined message to the RNCs.

25. The system of claim 21, wherein the called terminal comprises:
a seventh component, adapted to send a Radio Resource Control, RRC, connection request message to the RNC upon receiving a paging message from the RNC;
an eighth component, adapted to configure an SRB and an RB, and send (209) an RRC connection setup completion message and an RB setup completion message to the RNC after receiving (208) an RRC connection setup message and an RB setup message from the RNC.

26. The system of claim 25, wherein the eighth component comprises:
a fifth sub-module, adapted to configure the Signalling RB and the RB;
a sixth sub-module, adapted to combine the RRC connection setup completion message and the RB setup completion message into one message, and send the combined message to the RNC.

27. The system of claim 21, wherein the RNC comprises:
a ninth component, adapted to set a configuration parameter of the RB and a configuration parameter of the Signaling RB, SRB, according to the QoS parameter in the RAB Assignment message upon receiving the RRC connection request message;
a tenth component, adapted to send an RRC connection setup message and an RB setup message to the called terminal; and
an eleventh component, adapted to send an RAB Assignment Response message to the CN.

28. The system of claim 27, wherein the tenth component comprises:
a seventh sub-module, adapted to combine the RRC connection setup message and the RB setup message into one message and send the combined message to the called terminal.

## Patentansprüche

1. Verfahren zum Herstellen einer Anrufverbindung, mit den folgenden Schritten:
ein Kernnetz CN benachrichtigt durch eine Funknetzsteuerung RNC ein angerufenes Endgerät, eine schnelle Anrufverbindung herzustellen, wenn eine Dienstanforderungsnachricht von einem anrufenden Endgerät empfangen wird;
das angerufene Endgerät stellt die schnelle Anrufverbindung mit der RNC durch gleichzeitiges Herstellen einer Signalisierungsverbindung und einer Dienstverbindung mit der RNC her; und
das angerufene Endgerät führt eine schnelle Verbindungsherstellung mit dem anrufenden Endgerät aus;
wobei das gleichzeitige Herstellen der Signalisierungsverbindung und der Dienstverbindung mit der RNC ferner Folgendes umfasst:
das angerufene Endgerät sendet (206) eine Verbindungsanforderungsnachricht der Funkbetriebsmittelsteuerung RRC zu der RNC;
die RNC setzt (207) einen Konfigurationsparameter des Funkträgers RB und einen Konfigurationsparameter des Signalisierungs-RB SRB;
die RNC sendet (208) eine RRC-Verbindungsherstellungsnachricht und eine RB-Herstellungsnachricht zu dem angerufenen Endgerät.

2. Verfahren nach Anspruch 1, wobei die Dienstanforderungsnachricht eine ID der schnellen Verbindung trägt; und das CN gemäß der ID der schnellen Verbindung bestimmt, den Prozess des Benachrichtigens des angerufenen Endgeräts, die schnelle Anrufverbindung herzustellen, auszuführen.

3. Verfahren nach Anspruch 2, ferner mit dem folgenden Schritt: Hinzufügen eines Informationselements in der Dienstanforderungsnachricht, um die ID der schnellen Verbindung zu tragen.

4. Verfahren nach Anspruch 2, wobei die durch das anrufende Endgerät gesendete Dienstanforderungsnachricht die ID der schnellen Verbindung durch einen beliebigen Wert eines Diensttypinformationselements in der Dienstanforderungsnachricht trägt.

5. Verfahren nach Anspruch 1, wobei der Prozess des Benachrichtigens des angerufenen Endgeräts, die schnelle Anrufverbindung herzustellen, Folgendes umfasst:
Senden einer Paging-Nachricht zum Paging des angerufenen Endgeräts und einer Herstellungsnachricht zu RNC, die einem Ortsbereich entsprechen, in dem sich das angerufene Endgerät befindet;
Senden einer Zuweisungsnachricht des Funkzugangsträgers RAB, die einen Dienstgüte- bzw. QoS-Parameter trägt, zu jeder der RNC;
und jede der RNC sendet eine Paging-Nachricht durch eine Nachricht des PAGING TYPE 1.

6. Verfahren nach Anspruch 5, wobei der Prozess des Sendens der Paging-Nachricht zum Paging des angerufenen Endgeräts und der Herstellungsnachricht Folgendes umfasst:
gleichzeitiges Senden der Paging-Nachricht und der Herstellungsnachricht zu den RNC, die dem Ortsbereich entsprechen, in dem sich das angerufene Endgerät befindet; oder
Kombinieren der Paging-Nachricht und der Herstellungsnachricht zu einer Nachricht und Senden der kombinierten Nachricht zu den RNC, die dem Ortsbereich entsprechen, in dem sich das angerufene Endgerät befindet.

7. Verfahren nach Anspruch 5 oder 6, wobei der Prozess des Sendens der RAB-Zuweisungsnachricht, die den QoS-Parameter trägt, zu jeder der RNC ausgeführt wird, nachdem der Prozess des Sendens der Paging-Nachricht zum Paging des angerufenen Endgeräts und der Herstellungsnachricht ausgeführt wurde.

8. Verfahren nach Anspruch 5, wobei der Prozess des Sendens der Paging-Nachricht zum Paging des angerufenen Endgeräts und der Herstellungsnachricht und des Sendens der RAB-Zuweisungsnachricht Folgendes umfasst:
gleichzeitiges Senden der Paging-Nachricht, der Herstellungsnachricht und der RAB-Zuweisungsnachricht, die den QoS-Parameter trägt, zu den RNC, die dem Ortsbereich entsprechen, in dem sich das angerufene Endgerät befindet; oder
Kombinieren der Paging-Nachricht, der Herstellungsnachricht und der RAB-Zuweisungsnachricht, die den QoS-Parameter trägt, zu einer Nachricht und Senden der kombinierten Nachricht zu den RNC, die dem Ortsbereich entsprechen, in dem sich das angerufene Endgerät befindet.

9. Verfahren nach Anspruch 5, ferner mit den folgenden Schritten:
Starten eines Timers beim Senden der Nachricht des PAGING TYPE 1 durch jede der RNC und Senden der Nachricht des PAGING TYPE 1 in regelmäßigen Intervallen;
Beenden des Prozesses des Herstellens einer Anrufverbindung, wenn keine Antwort von dem anrufenden Endgerät empfangen wird, wenn der Timer abläuft.

10. Verfahren nach Anspruch 5, wobei der Prozess des Setzens der Konfigurationsparameter gemäß dem QoS-Parameter in der RAB-Zuweisungsnachricht beim Empfang der RRC-Verbindungsanforderungsnachricht erfolgt; wobei das Verfahren ferner die folgenden Schritte umfasst:
das angerufene Endgerät sendet (206) die Verbindungsanforderungsnachricht der Funkbetriebsmittelsteuerung RRC zu der RNC beim Empfang (204) der durch die RNC gesendeten Nachricht des PAGING TYPE 1, bevor die RNC die Konfigurationsparameter setzt; und
nach dem Empfangen (208) der RRC-Verbindungsherstellungsnachricht und der RB-Herstellungsnachricht von der RNC konfiguriert das angerufene Endgerät den Signalisierungs-RB und den RB und sendet (209) eine Nachricht, die Informationen des RRC-Verbindungsherstellungsabschlusses und Informationen des RB-Herstellungsabschlusses trägt, zu der RNC; und
die RNC sendet (210) eine RAB-Zuweisungsantwortnachricht zu dem CN.

11. Verfahren nach Anspruch 1 oder 10, wobei der Prozess des Sendens der RRC-Verbindungsherstellungsnachricht und der RB-Herstellungsnachricht zu dem angerufenen Endgerät Folgendes umfasst:
gleichzeitiges Senden der RRC-Verbindungsherstellungsnachricht und der RB-Herstellungsnachricht zu dem angerufenen Endgerät; oder
Kombinieren der RRC-Verbindungsherstellungsnachricht und der RB-Herstellungsnachricht zu einer Nachricht und Senden der kombinierten Nachricht zu dem angerufenen Endgerät.

12. Verfahren nach Anspruch 10, wobei der Prozess des Sendens der Nachricht, die die Informationen des RRC-Verbindungsherstellungsabschlusses und die Informationen des RB-Herstellungsabschlusses trägt, zu der RNC durch das angerufene Endgerät Folgendes umfasst:
gleichzeitiges Senden einer RRC-Verbindungsherstellungsabschlussnachricht und einer RB-Herstellungsabschlussnachricht zu der RNC; oder
Kombinieren der RRC-Verbindungsherstellungsabschlussnachricht und der RB-Herstellungsabschlussnachricht zu einer Nachricht und Senden der kombinierten Nachricht zu der RNC.

13. Verfahren nach Anspruch 1, wobei eine automatische Antwortfunktion für das angerufene Endgerät konfiguriert wird; und
der Prozess des Ausführens der schnellen Verbindungsverarbeitung Folgendes umfasst:
bei Herstellung der Signalisierungsverbindung und der Dienstverbindung sendet das angerufene Endgerät gleichzeitig eine Paging-Antwortnachricht, eine Anruf-bestätigt-Nachricht und eine Verbindungsnachricht zu dem CN; oder die Paging-Antwortnachricht, die Anruf-bestätigt-Nachricht und die Verbindungsnachricht werden zu einer Nachricht kombiniert und die kombinierte Nachricht wird zu dem CN gesendet;
das CN sendet die Verbindungsnachricht zu dem anrufenden Endgerät;
Beginnen mit dem Sprechen zwischen einem anrufenden Benutzer und einem angerufenen Benutzer beim Empfang der Verbindungsnachricht durch das anrufende Endgerät.

14. Verfahren nach Anspruch 1, wobei keine automatische Antwortfunktion für das angerufene Endgerät konfiguriert wird; und
der Prozess des Ausführens der schnellen Verbindungsverarbeitung Folgendes umfasst:
bei Herstellung der Signalisierungsverbindung und der Dienstverbindung sendet das angerufene Endgerät gleichzeitig eine Paging-Antwortnachricht, eine Anruf-bestätigt-Nachricht und eine Rufineldungsnachricht zu dem CN; oder die Paging-Antwortnachricht, die Anruf-bestätigt-Nachricht und die Rufmeldungsnachricht werden zu einer Nachricht kombiniert und die kombinierte Nachricht wird zu dem CN gesendet;
das CN sendet die Rufmeldungsnachricht zu dem anrufenden Endgerät;
das angerufene Endgerät sendet eine Verbindungsnachricht zu dem CN, nachdem sich der angerufene Teilnehmer meldet;
das CN sendet die Verbindungsnachricht zu dem anrufenden Endgerät;
Beginnen mit dem Sprechen zwischen einem anrufenden Benutzer und einem angerufenen Benutzer beim Empfang der Verbindungsnachricht durch das anrufende Endgerät.

15. Endgerät für ein System mit Breitband-Vielfachzugriff im Codemultiplex bzw. WCDMA oder ein System mit synchronem Zeitmultiplex-Vielfachzugriff im Codemultiplex bzw. TD-SCDMA, umfassend:
eine Komponente, die dafür ausgelegt ist, beim Empfang einer Paging-Nachricht eine Verbindungsanforderungsnachricht der Funkbetriebsmittelsteuerung RRC zu einer RNC zu senden;
eine Komponente, die dafür ausgelegt ist, beim Empfang einer RRC-Verbindungsherstellungsnachricht und einer RB-Herstellungsnachricht von der RNC einen Signalisierungs-Funkträger SRB und einen RB zu konfigurieren und eine RRC-Verbindungsherstellungsabschlussnachricht und eine RB-Herstellungsabschlussnachricht zu der RNC zu senden;
wobei das Endgerät dafür ausgelegt ist, gleichzeitig eine Signalisierungs- und eine Dienstverbindung mit der RNC herzustellen, so dass das Endgerät eine schnelle Verbindungsverarbeitung mit einem anderen Endgerät ausführt.

16. Endgerät nach Anspruch 15, ferner umfassend:
eine erste Komponente, die dafür ausgelegt ist, eine ID der schnellen Verbindung in eine Dienstanforderungsnachricht einzufügen;
eine zweite Komponente, die dafür ausgelegt ist, die die ID der schnellen Verbindung tragende Dienstanforderungsnachricht durch eine Funknetzsteuerung RNC zu einem Kernnetz CN zu senden; und
eine dritte Komponente, die dafür ausgelegt ist, schnelle Verbindungsverarbeitung mit einem anderen Endgerät auszuführen;
eine vierte Komponente, die dafür ausgelegt ist, gleichzeitig eine Signalisierungsverbindung und eine Dienstverbindung mit der RNC herzustellen.

17. Endgerät nach Anspruch 15 oder 16, wobei die achte Komponente ferner Folgendes umfasst:
ein sechstes Submodul, das dafür ausgelegt ist, die RRC-Verbindungsherstellungsabschlussnachricht und die RB-Herstellungsabschlussnachricht zu einer Nachricht zu kombinieren und die kombinierte Nachricht zu der RNC zu senden.

18. Einrichtung in einem Kernnetz CN für ein System mit Breitband-Vielfachzugriff im Codemultiplex bzw. WCDMA oder ein System mit synchronem Zeitmultiplex-Vielfachzugriff im Codemultiplex bzw. TD-SCDMA, umfassend:
eine fünfte Komponente, die dafür ausgelegt ist, gemäß einer in einer durch ein anrufendes Endgerät gesendeten Dienstanforderungsnachricht getragenen ID der schnellen Verbindung zu bestimmen, ob durch eine Funknetzsteuerung RNC ein angerufenes Endgerät benachrichtigt werden soll, eine schnelle Anrufverbindung herzustellen, wobei das angerufene Endgerät die schnelle Anrufverbindung durch gleichzeitiges Herstellen einer Signalisierungsverbindung und einer Dienstverbindung mit der RNC herstellt; und
eine sechste Komponente, die dafür ausgelegt ist, eine Paging-Nachricht zum Paging des angerufenen Endgeräts und eine Herstellungsnachricht zu RNC, die einem Ortsbereich entsprechen, in dem sich das angerufene Endgerät befindet, zu senden und eine Zuweisungsanforderungsnachricht des Funkzugangsträgers RAB, die einen Dienstgüte- bzw. QoS-Parameter trägt, zu jeder der RNC zu senden.

19. Einrichtung nach Anspruch 18, wobei die sechste Komponente Folgendes umfasst:
ein erstes Submodul, das dafür ausgelegt ist, die Paging-Nachricht und die Herstellungsnachricht zu einer Nachricht zu kombinieren und die kombinierte Nachricht zu den RNC zu senden; und
ein zweites Submodul, das dafür ausgelegt ist, die RAB-Zuweisungsanforderungsnachricht, die den QoS-Parameter trägt, zu jeder der RNC zu senden.

20. Einrichtung nach Anspruch 18, wobei die sechste Komponente Folgendes umfasst:
ein drittes Submodul, das dafür ausgelegt ist, die Paging-Nachricht, die Herstellungsnachricht und die RAB-Zuweisungsanforderungsnachricht zu einer Nachricht zu kombinieren; und
ein viertes Submodul, das dafür ausgelegt ist, die kombinierte Nachricht zu den RNC zu senden.

21. System zum Herstellen einer Anrufverbindung, umfassend: ein Kernnetz CN, ein anrufendes Endgerät, eine Funknetzsteuerung RNC und ein angerufenes Endgerät, wobei
das CN dafür ausgelegt ist, durch die RNC das angerufene Endgerät zu benachrichtigen, eine schnelle Anrufverbindung herzustellen, wenn eine Dienstanforderungsnachricht von einem anrufenden Endgerät empfangen wird;
das angerufene Endgerät dafür ausgelegt ist, die schnelle Anrufverbindung mit der RNC durch gleichzeitiges Herstellen einer Signalisierungsverbindung und einer Dienstverbindung mit der RNC herzustellen; und schnelle Verbindungsverarbeitung mit dem anrufenden Endgerät auszuführen; wobei das gleichzeitige Herstellen der Signalisierungsverbindung und der Dienstverbindung mit der RNC ferner Folgendes umfasst:
das angerufene Endgerät ist dafür ausgelegt, eine Verbindungsanforderungsnachricht der Funkbetriebsmittelsteuerung RRC zu der RNC zu senden (206); und die RNC ist dafür ausgelegt, einen Konfigurationsparameter des Funkträgers RB und einen Konfigurationsparameter des Signalisierungs-RB SRB zu setzen (207) und eine RRC-Verbindungsherstellungsnachricht und eine RB-Herstellungsnachricht zu dem angerufenen Endgerät zu senden (208).

22. System nach Anspruch 21, wobei das CN eine Einrichtung umfasst, wobei die Einrichtung ferner Folgendes umfasst:
eine fünfte Komponente, die dafür ausgelegt ist, gemäß einer in der durch das anrufende Endgerät gesendeten Dienstanforderungsnachricht getragenen ID der schnellen Verbindung zu bestimmen, ob durch die RNC das angerufene Endgerät benachrichtigt werden soll, eine schnelle Anrufverbindung herzustellen; und
eine sechste Komponente, die dafür ausgelegt ist, eine Paging-Nachricht zum Paging des angerufenen Endgeräts und eine Herstellungsnachricht zu RNC, die einem Ortsbereich entsprechen, in dem sich das angerufene Endgerät befindet, zu senden und eine Zuweisungsanforderungsnachricht des Funkzugangsträgers RAB, die einen Dienstgüte- bzw. QoS-Parameter trägt, zu jeder der RNC zu senden.

23. System nach Anspruch 22, wobei die sechste Komponente Folgendes umfasst:
ein erstes Submodul, das dafür ausgelegt ist, die Paging-Nachricht und die Herstellungsnachricht zu einer Nachricht zu kombinieren und die kombinierte Nachricht zu den RNC zu senden; und
ein zweites Submodul, das dafür ausgelegt ist, die RAB-Zuweisungsanforderungsnachricht, die den QoS-Parameter trägt, zu jeder der RNC zu senden.

24. System nach Anspruch 23, wobei die sechste Komponente Folgendes umfasst:
ein drittes Submodul, das dafür ausgelegt ist, die Paging-Nachricht, die Herstellungsnachricht und die RAB-Zuweisungsanforderungsnachricht zu einer Nachricht zu kombinieren; und
ein viertes Submodul, das dafür ausgelegt ist, die kombinierte Nachricht zu den RNC zu senden.

25. System nach Anspruch 21, wobei das angerufene Endgerät Folgendes umfasst:
eine siebte Komponente, die dafür ausgelegt ist, beim Empfang einer Paging-Nachricht von der RNC eine Verbindungsanforderungsnachricht der Funkbetriebsmittelsteuerung RRC zu der RNC zu senden;
eine achte Komponente, die dafür ausgelegt ist, nach dem Empfang (208) einer RRC-Verbindungsherstellungsnachricht und einer RB-Herstellungsnachricht von der RNC einen SRB und einen RB zu konfigurieren und eine RRC-Verbindungsherstellungsabschlussnachricht und eine RB-Herstellungsabschlussnachricht zu der RNC zu senden (209).

26. System nach Anspruch 25, wobei die achte Komponente Folgendes umfasst:
ein fünftes Submodul, das dafür ausgelegt ist, den Signalisierungs-RB und den RB zu konfigurieren;
ein sechstes Submodul, das dafür ausgelegt ist, die RRC-Verbindungsherstellungsabschlussnachricht und die RB-Herstellungsabschlussnachricht zu einer Nachricht zu kombinieren und die kombinierte Nachricht zu der RNC zu senden.

27. System nach Anspruch 21, wobei die RNC Folgendes umfasst:
eine neunte Komponente, die dafür ausgelegt ist, nach dem Empfang der RRC-Verbindungsanforderungsnachricht einen Konfigurationsparameter des RB und einen Konfigurationsparameter des Signalisierungs-RB SRB gemäß dem QoS-Parameter in der RAB-Zuweisungsnachricht zu setzen;
eine zehnte Komponente, die dafür ausgelegt ist, eine RRC-Verbindungsherstellungsnachricht und eine RB-Herstellungsnachricht zu dem angerufenen Endgerät zu senden; und
eine elfte Komponente, die dafür ausgelegt ist, eine RAB-Zuweisungsantwortnachricht zu dem CN zu senden.

28. System nach Anspruch 27, wobei die zehnte Komponente Folgendes umfasst:
ein siebtes Submodul, das dafür ausgelegt ist, die RRC-Verbindungsherstellungsnachricht und die RB-Herstellungsnachricht zu einer Nachricht zu kombinieren und die kombinierte Nachricht zu dem angerufenen Endgerät zu senden.

## Revendications

1. Procédé d'établissement d'une connexion d'appel, comprenant :
la notification, par un Réseau Central, CN, par le biais d'un Contrôleur de Réseau Radio, RNC, à un terminal appelé d'établir une connexion d'appel rapide à la réception d'un message de requête de service depuis un terminal appelant ;
l'établissement, par le terminal appelé, de la connexion d'appel rapide avec le RNC par l'établissement simultané d'une connexion de signalisation et d'une connexion de service avec le RNC ; et
l'exécution, par le terminal appelé, d'un traitement de connexion rapide avec le terminal appelant ;
dans lequel l'établissement simultané de la connexion de signalisation et de la connexion de service avec le RNC comprend en outre :
l'envoi (206) par le terminal appelé, au RNC, d'un message de requête de connexion à une Commande de Ressource Radio, RRC ;
l'établissement (207), par le RNC, d'un paramètre de configuration d'un Support Radio, RB, et d'un paramètre de configuration d'un RB de Signalisation, SRB ;
l'envoi (208), par le RNC, d'un message d'établissement de connexion à une RRC et d'un message d'établissement de RB au terminal appelé.

2. Procédé selon la revendication 1, dans lequel le message de requête de service porte une ID de connexion rapide ; et le CN détermine, en fonction de l'ID de connexion rapide, s'il convient d'exécuter le processus de notification au terminal appelé afin d'établir la connexion d'appel rapide.

3. Procédé selon la revendication 2, comprenant en outre l'ajout d'un élément d'information dans le message de requête de service afin de communiquer l'ID de connexion rapide.

4. Procédé selon la revendication 2, dans lequel le message de requête de service envoyé par le terminal appelant communique l'ID de connexion rapide par n'importe quelle valeur d'élément d'information de type de service dans le message de requête de service.

5. Procédé selon la revendication 1, dans lequel le processus de notification au terminal appelé d'établir la connexion d'appel rapide comprend :
l'envoi d'un message de recherche pour rechercher le terminal appelé et d'un message d'établissement aux RNC correspondant à une zone où se trouve le terminal appelé ;
l'envoi d'un message d'Assignation de Support d'Accès Radio, RAB, communiquant un paramètre de Qualité de Service QoS à chacun des RNC ;
et l'envoi, par chacun des RNC, d'un message de recherche par le biais d'un message de RECHERCHE TYPE 1.

6. Procédé selon la revendication 5, dans lequel le processus d'envoi du message de recherche pour rechercher le terminal appelé et du message d'établissement comprend :
l'envoi simultané du message de recherche et du message d'établissement aux RNC correspondant à la zone où se trouve le terminal appelé ; ou
la combinaison en un même message du message de recherche et du message d'établissement et l'envoi du message combiné aux RNC correspondant à la zone où se trouve le terminal appelé.

7. Procédé selon la revendication 5 ou 6, dans lequel le processus d'envoi du message d'Assignation de RAB communiquant le paramètre QoS à chacun des RNC est effectué après le processus d'envoi du message de recherche pour rechercher le terminal appelé et du message d'établissement.

8. Procédé selon la revendication 5, dans lequel le processus d'envoi du message de recherche pour rechercher le terminal appelé et du message d'établissement, et l'envoi du message d'Assignation de RAB comprend :
l'envoi simultané du message de recherche, du message d'établissement et du message d'Assignation de RAB communiquant le paramètre QoS aux RNC correspondant à la zone où se trouve le terminal appelé ; ou
la combinaison en un même message du message de recherche, du message d'établissement et du message d'Assignation de RAB communiquant le paramètre QOS et l'envoi du message combiné aux RNC correspondant à la zone où se trouve le terminal appelé.

9. Procédé selon la revendication 5, comprenant en outre :
le démarrage d'une minuterie à l'envoi du message de RECHERCHE TYPE 1 par chacun des RNC, et l'envoi du message de RECHERCHE TYPE 1 à intervalles réguliers;
l'arrêt du processus d'établissement d'une connexion d'appel si aucune réponse n'est reçue du terminal appelé à l'expiration de la minuterie.

10. Procédé selon la revendication 5, dans lequel le processus d'établissement des paramètres de configuration s'effectue en fonction du paramètre QoS contenu dans le message d'Assignation de RAB à la réception du message de requête de connexion à une RRC ; le procédé comprenant en outre :
l'envoi (206), par le terminal appelé, du message de requête de connexion à une Commande de Ressource Radio, RRC, au RNC à la réception (204) du message de RECHERCHE TYPE 1 envoyé par le RNC avant que celui-ci n'établisse les paramètres de configuration ; et
après réception (208) du message d'établissement de connexion à une RRC et du message d'établissement de RB depuis le RNC, la configuration, par le terminal appelé, du RB de Signalisation et du RB, et l'envoi (209) d'un message communiquant l'information de l'achèvement de l'établissement de la connexion à une RRC et l'information d'achèvement d'établissement de RB au RNC ; et
l'envoi (210), par le RNC, d'un message de Réponse à l'Assignation de RAB au CN.

11. Procédé selon la revendication 1 ou 10, dans lequel le processus d'envoi du message d'établissement de connexion à une RRC et du message d'établissement de RB au terminal appelé comprend :
l'envoi simultané du message d'établissement de connexion à une RRC et du message d'établissement de RB au terminal appelé ; ou
la combinaison en un même message du message d'établissement de connexion à une RRC et du message d'établissement de RB et l'envoi du message combiné au terminal appelé.

12. Procédé selon la revendication 10, dans lequel le processus d'envoi du message communiquant l'information de l'achèvement de l'établissement de la connexion à une RRC et de l'information d'achèvement de l'établissement de RB au RNC par le terminal appelé comprend :
l'envoi simultané d'un message d'achèvement d'établissement de connexion à une RRC et d'un message d'achèvement d'établissement de RB au RNC ; ou
la combinaison en un même message du message d'achèvement d'établissement de connexion avec une RRC et du message d'achèvement d'établissement de RB et l'envoi du message combiné au RNC.

13. Procédé selon la revendication 1, dans lequel une fonction de réponse automatique est configurée pour le terminal appelé ; et
le processus d'exécution du traitement de connexion rapide comprend :
à l'établissement de la connexion de signalisation et de la connexion de service, l'envoi simultané, par le terminal appelé, d'un message de réponse à la recherche, d'un message d'appel confirmé et d'un message de connexion au CN ; ou la combinaison en un même message du message de réponse à la recherche, du message d'appel confirmé et du message de connexion et l'envoi du message combiné au CN ;
l'envoi, par le CN, du message de connexion au terminal appelant ;
le début de la communication entre un utilisateur appelant et un utilisateur appelé à la réception du message de connexion par le terminal appelant.

14. Procédé selon la revendication 1, dans lequel aucune fonction de réponse automatique n'est configurée pour le terminal appelé ; et
le processus d'exécution du traitement de connexion rapide comprend :
à l'établissement de la connexion de signalisation et de la connexion de service, l'envoi simultané, par le terminal appelé, d'un message de réponse à la recherche, d'un message d'appel confirmé et d'un message d'Alerte au CN ; ou la combinaison en un même message du message de réponse à la recherche, du message d'appel confirmé et du message d'Alerte et l'envoi du message combiné au CN ;
l'envoi, par le CN, du message d'Alerte au terminal appelant ;
l'envoi, par le terminal appelé, d'un message de connexion au CN après le décrochage par le correspondant appelé ;
l'envoi, par le CN, du message de connexion au terminal appelant ;
le début de la communication entre un utilisateur appelant et un utilisateur appelé à la réception du message de connexion par le terminal appelant.

15. Terminal pour système à Accès Multiple par Différence de Code à Large bande, WCDMA, ou système à Accès Multiple par Différence de Code Synchrone et à Répartition Temporelle, TD-SCDMA, comprenant :
un composant, adapté pour envoyer à un RNC un message de requête de connexion à une Commande de Ressource Radio, RRC, à la réception d'un message de recherche ;
un composant, adapté pour configurer un Support Radio de Signalisation, SRB, et un RB, et envoyer un message d'achèvement d'établissement de connexion à une RRC et un message d'achèvement d'établissement de RB au RNC à la réception d'un message d'établissement de connexion à une RRC et d'un message d'établissement de RB depuis le RNC;
dans lequel le terminal est adapté pour établir simultanément une connexion de signalisation et de service avec le RNC de telle sorte que le terminal exécute un traitement de connexion rapide avec un autre terminal.

16. Terminal selon la revendication 15, comprenant en outre :
un premier composant, adapté pour ajouter une ID de connexion rapide à un message de requête de service ;
un deuxième composant, adapté pour envoyer le message de requête de service communiquant l'ID de connexion rapide à un Réseau Central, CN, par le biais d'un Contrôleur de Réseau Radio, RNC ; et
un troisième composant, adapté pour exécuter un traitement de connexion rapide avec un autre terminal ;
un quatrième composant, adapté pour établir simultanément une connexion de signalisation et une connexion de service avec le RNC.

17. Terminal selon la revendication 15 ou 16, le huitième composant comprenant en outre :
un sixième sous-module, adapté pour combiner en un même message le message d'achèvement d'établissement de connexion à une RRC et le message d'achèvement d'établissement de RB, et envoyer le message combiné au RNC.

18. Dispositif dans un Réseau Central, CN, d'un système à Accès Multiple par Différence de Code à Large bande, WCDMA, ou d'un système à Accès Multiple par Différence de Code Synchrone et à Répartition Temporelle, TD-SCDMA, comprenant :
un cinquième composant, adapté pour déterminer, en fonction d'une ID de connexion rapide communiquée dans un message de requête de service envoyé par un terminal appelant, s'il convient de notifier par le biais d'un Contrôleur de Réseau Radio, RNC, un terminal appelé, d'établir une connexion d'appel rapide par l'établissement simultané d'une connexion de signalisation et d'une connexion de service avec le RNC ; et
un sixième composant, adapté pour envoyer un message de recherche pour rechercher le terminal appelé et un message d'établissement aux RNC correspondant à une zone où se trouve le terminal appelé, et envoyer un message de Requête d'Asssignation de Support d'Accès Radio, RAB, communiquant un paramètre de Qualité de Service QoS à chacun des RNC.

19. Dispositif selon la revendication 18, dans lequel le sixième composant comprend :
un premier sous-module, adapté pour combiner en un même message le message de recherche et le message d'établissement et envoyer le message combiné aux RNC ; et
un deuxième sous-module, adapté pour envoyer le message de Requête d'Assignation de RAB communiquant le paramètre QoS à chacun des RNC.

20. Dispositif selon la revendication 18, dans lequel le sixième composant comprend :
un troisième sous-module, adapté pour combiner en un même message le message de recherche, le message d'établissement et le message de Requête d'Assignation de RAB ; et
un quatrième sous-module, adapté pour envoyer le message combiné aux RNC.

21. Système d'établissement d'une connexion d'appel comprenant : un Réseau Central, CN, un terminal appelant, un Contrôleur de Réseau Radio, RNC, et un terminal appelé, dans lequel :
le CN est adapté pour notifier, par le biais du RNC, à un terminal appelé d'établir une connexion d'appel rapide à la réception d'un message de requête de service depuis le terminal appelant ;
le terminal appelé est adapté pour établir la connexion d'appel rapide avec le RNC par l'établissement simultané d'une connexion de signalisation et d'une connexion de service avec le RNC ; et exécuter un traitement de connexion rapide avec le terminal appelant ; dans lequel l'établissement simultané de la connexion de signalisation et de la connexion de service avec le RNC comprend en outre :
le terminal appelé est adapté pour envoyer (206) un message de requête de connexion à une Commande de Ressource Radio, RRC, au RNC ; et le RNC est adapté pour établir (207) un paramètre de configuration d'un Support Radio, RB, et un paramètre de configuration d'un RB de Signalisation, SRB, et envoyer (208) un message d'établissement de connexion à une RRC et un message d'établissement de RB au terminal appelé.

22. Système selon la revendication 21, dans lequel le CN comprend un dispositif, le dispositif comprenant en outre :
un cinquième composant, adapté pour déterminer, en fonction d'une ID de connexion rapide communiquée dans le message de requête de service envoyé par le terminal appelant, s'il convient de notifier au terminal appelé par le biais du RNC d'établir la connexion d'appel rapide ; et
un sixième composant, adapté pour envoyer un message de recherche pour rechercher le terminal appelé et un message d'établissement aux RNC correspondant à une zone où se trouve le terminal appelé, et envoyer un message de Requête d'Assignation de Support d'Accès Radio, RAB, communiquant un paramètre de Qualité de Service, QoS, à chacun des RNC.

23. Système selon la revendication 22, dans lequel le sixième composant comprend :
un premier sous-module, adapté pour combiner en un même message le message de recherche et le message d'établissement et envoyer le message combiné aux RNC ; et
un deuxième sous-module, adapté pour envoyer le message de Requête d'Assignation de RAB communiquant le paramètre QoS à chacun des RNC.

24. Système selon la revendication 23, dans lequel le sixième composant comprend :
un troisième sous-module, adapté pour combiner en un même message le message de recherche, le message d'établissement et le message de Requête d'Assignation de RAB ; et
un quatrième sous-module, adapté pour envoyer le message combiné aux RNC.

25. Système selon la revendication 21, dans lequel le terminal appelé comprend :
un septième composant, adapté pour envoyer un message de requête de connexion à une Commande de Ressource Radio, RRC, au RNC à la réception d'un message de recherche depuis le RNC ;
un huitième composant, adapté pour configurer un SRB et un RB, et envoyer (209) un message d'achèvement d'établissement de connexion à une RRC et un message d'achèvement d'établissement de RB au RNC après la réception (208) d'un message d'établissement de connexion à une RRC et d'un message d'établissement de RB depuis le RNC.

26. Système selon la revendication 25, dans lequel le huitième composant comprend :
un cinquième sous-module, adapté pour configurer le RB de Signalisation et le RB ;
un sixième sous-module, adapté pour combiner en un même message le message d'achèvement d'établissement de connexion à une RRC et le message d'achèvement d'établissement de RB et envoyer le message combiné au RNC.

27. Système selon la revendication 21, dans lequel le RNC comprend :
un neuvième composant, adapté pour établir un paramètre de configuration du RB et un paramètre de configuration du RB de Signalisation, SRB, en fonction du paramètre QoS compris dans le message d'Assignation de RAB à la réception du message de requête de connexion à une RRC ;
un dixième composant, adapté pour envoyer un message d'établissement de connexion à une RRC et un message d'établissement de RB au terminal appelé ; et
un onzième composant, adapté pour envoyer un message de Réponse d'Assignation de RAB au CN.

28. Système selon la revendication 27, dans lequel le dixième composant comprend :
un septième sous-module, adapté pour combiner en un même message le message d'établissement de connexion à une RRC et le message d'établissement de RB et envoyer le message combiné au terminal appelé.
